# EUROPEAN PATENT APPLICATION

(11) **EP 2 413 533 A1**
(43) Date of publication of application: **01.02.2012**
(21) Application number: 11005996.1
(22) Date of filing: 21.07.2011
(51) Int. Cl.: H04L 12/24, H04L 12/12

(54) **Network power management**

(30) Priority: 30.07.2010 US 369526 P; 30.06.2011 US 174328
(71) Applicant: Broadcom Corporation, Irvine, CA 92617 (US)
(72) Inventor: Diab, Waei William, San Francisco, CA 94109 (US); Li, Rick Weidong, Saratoga, CA 95070 (US); Ilyadis, Nicholas, Merrimack, NH 03054 (US)
(74) Representative: Jehle, Volker Armin

(57) **Abstract**

A system for managing energy efficiency and control mechanisms in a computer network having a plurality of network components is provided. The system includes a network power manager (NPM) coupled to at least one of the plurality of network components. The NPM is configured to receive and analyze power information from at least one of the plurality of the network components. The NPM is further configured to generate configuration instructions based on the analyzing of the power information and send the configuration instructions to at least one of the network components.

## Description

### CROSS REFERENCE TO RELATED APPLICATIONS

This patent application claims the benefit of U.S. Provisional Patent Application No. 61/369,526 filed on July 30, 2010, now pending, entitled "Network Power Management," which is incorporated by reference herein in its entirety.

### FIELD OF THE INVENTION

The present invention generally relates to managing power consumption in a network.

### BACKGROUND OF THE INVENTION

Energy costs continue to escalate in a trend that has accelerated in recent years. Because of this, various industries have become increasingly sensitive to the impact of those rising costs. One area that has drawn increasing scrutiny is the IT infrastructure. Many companies are now looking at their IT systems' power usage to determine whether the energy costs can be reduced. For this reason, an industry focus on energy efficient networks has arisen to address the rising costs of IT equipment usage as a whole (*e.g.*, PCs, displays, printers, servers, network components, etc.).

Modem networking components are increasingly implementing energy consumption and efficiency (ECE) control mechanisms. Traditional ECE mechanisms, such as power shedding are also being used in networks. Some modem ECE control mechanisms allow physical layer components to enter and exit a low power state. An ECE control policy controls when and under what circumstances, ECE control enabled physical layer components enter and exit low power states. Device control policies play a key role in maximizing savings while minimizing performance impact on the network.

Though ECE mechanisms and control policies are becoming more widely implemented, conventional uses do not coordinate their use. Multiple uncoordinated, unsynchronized power saving mechanisms can lead to ineffective power savings at an individual component and network level.

### SUMMARY OF THE INVENTION

According to an aspect of the invention, a system is provided for managing energy efficiency and control mechanisms in a communications network having a plurality of network components, comprising:
a network power manager (NPM) coupled to at least one of the plurality of network components, wherein the NPM is configured to:
   receive power information from at least one of the plurality of the network components;
   analyze the power information;
   generate configuration instructions based on the analyzing of the power information; and
   send the configuration instructions to at least one of the network components.

Advantageously, the NPM is further configured to:
receive configuration information from at least one of the network components; and
send the configuration information to at least one of the network components.

Advantageously, the power information comprises an operational characteristic of one of the plurality of network components.

Advantageously, the operational characteristic is:
a supported link rate available to the network component, or a mode of operation available to the network component.

Advantageously, the configuration instructions comprise, for traffic on the network, at least one of routing information and switching information.

Advantageously, the configuration instructions comprise a control policy for controlling energy efficiency and control mechanisms.

Advantageously, the energy efficiency and control mechanisms include Energy Efficient Ethernet (EEE) control policies.

Advantageously, the NPM is further configured to coordinate configuration instructions sent to at least two of the plurality of network components.

Advantageously, the power information received by the NPM comprises a link utilization level of at least one of the plurality of network components.

Advantageously, the power information received by the NPM comprises characteristics of a link between two of the plurality of network components.

Advantageously, characteristics of the link between two of the plurality of network components comprises at least one of:
a size of the bursts on the link,
a time between bursts on the link, and
idle time on the link.

Advantageously, the power information received by the NPM comprises a control policy applied to one of the plurality of network components.

Advantageously, control policy applied to one of the plurality of network components comprises a link utilization threshold.

Advantageously, at least one of the plurality of network components is a network switch.

Advantageously, at least one of the plurality of network components is a port on a host.

Advantageously, at least one of the plurality of network components is an optical network component.

Advantageously, the NPM coordinates configuration instructions for both optical and non-optical network components.

Advantageously, the NPM receives power information from a network component encoded using at least one of link layer discovery protocol (LLDP) and simple network management protocol (SNMP).

Advantageously, the NPM sends configuration instructions to a network component encoded using simple network management protocol (SNMP).

Advantageously, the NPM coordinates a low-power state in two different network components.

Advantageously, a first component is an optical network component, and a second component is a non-optical network component.

According to an aspect, a method is provided of managing energy efficiency and control mechanisms in a network having a network power manager (NPM) and a plurality of network components, comprising:
receiving power information from at least one of the plurality of the network components;
analyzing the power information;
generating configuration instructions based on the analyzing of the power information; and
sending the configuration instructions to at least one of the network components.

Advantageously, the power information comprises an operational characteristic of one of the plurality of network components.

Advantageously, the configuration instructions comprise at least one of, routing instructions and switching instructions.

Advantageously, the routing instructions comprise a specific traffic path to be taken with respect to at least two of the plurality of network components.

Advantageously, the configuration instructions comprise a control policy for controlling energy efficiency and control mechanisms on at least one of the plurality of network components.

Advantageously, the energy efficiency and control mechanisms include Energy Efficient Ethernet (EEE) control policies.

Advantageously, the configuration instructions are generated for at least two network components and comprise configuration instructions to coordinate sleep cycles of the at least two network components.

Advantageously, the configuration instructions are generated for at least two network components and comprise configuration instructions to coordinate wake-up cycles of the at least two network components.

Advantageously:
the power information comprises information describing a network traffic event occurring associated with a first network component, the traffic event indicative of future traffic at a second network component; and
the configuration instructions comprise instructions to adjust sleep settings of the second component.

Advantageously:
the power information comprises information corresponding to the link speeds of at least two links between network components;
the configuration instructions comprise instructions to coordinate the link speeds so as to reduce buffering requirements associated with a network component; and
the sending comprises, sending the configuration instructions to network components associated with the at least two links.

Advantageously:
the power information comprises information describing buffering times for traffic in three network components:
   an originating network component,
   a first network component coupled to the originating component, and
   a second network component coupled to the first network component; and
the configuration instructions comprise instructions to:
   increase, based on the buffering times of the first and second network components, the buffering time at the originating network component, and
   reduce the buffering time at the first and second network components.

### BRIEF DESCRIPTION OF THE DRAWINGS/FIGURES

The accompanying drawings illustrate the present invention and, together with the description, further serve to explain the principles of the invention and to enable one skilled in the pertinent art to make and use the invention.

FIG. 1 is a block diagram of a sample network topology.

FIG. 2 is a block diagram of a sample network topology having a network power manager, according to an embodiment.

FIG. 3 is a block diagram of a sample network topology showing component configurations and having a network power manager, according to an embodiment.

FIG. 4 is a block diagram of a sample network topology showing different physical and logical placements of a network power manager, according to an embodiment.

FIG. 5 is a block diagram of a sample network topology showing component buffers and having a network power manager, according to an embodiment.

FIG. 6A depicts a sample timeline showing energy consumption and efficiency features of network components.

FIG. 6B depicts an additional sample timeline showing energy consumption and efficiency features of network components, according to an embodiment.

FIGs. 7A-B depict networks having an optical network unit (ONU), according to an embodiment.

FIGs. 8-11 provide flowcharts of example methods of managing energy efficiency and control mechanisms in a network having a network power manager (NPM) and a plurality of network components.

The invention is described with reference to the accompanying drawings. The drawing in which an element first appears is typically indicated by the leftmost digit(s) in the corresponding reference number.

### DETAILED DESCRIPTION OF THE INVENTION

The following detailed description of the present invention refers to the accompanying drawings that illustrate exemplary embodiments consistent with this invention. Other embodiments are possible, and modifications may be made to the embodiments within the spirit and scope of the invention. Therefore, the detailed description is not meant to limit the invention. Rather, the scope of the invention is defined by the appended claims.

Features and advantages of the invention are set forth in the description that follows, and in part are apparent from the description, or may be learned by practice of the invention. The advantages of the invention are realized and attained by the structure and particularly pointed out in the written description and claims hereof as well as the appended drawings. The following detailed description is exemplary and explanatory and is intended to provide further explanation of the invention as claimed.

The embodiment(s) described and references in the specification to "one embodiment," "an embodiment," "an example embodiment," etc., indicate that the embodiment(s) described may include a particular feature, structure, or characteristic. However, every embodiment may not necessarily include the particular feature, structure or characteristic. Moreover, such phrases are not necessarily referring to the same embodiment. When a particular feature, structure or characteristic is described in connection with an embodiment, it is understood that it is within the knowledge of one skilled in the art to effect such feature, structure, or characteristic in connection with other embodiments, whether or not explicitly described.

### Overview

Generally speaking, some embodiments described herein provide an improved approach to universal, coordinated network management. In contrast to the disparate implementation of policies and configurations noted above, herein a network power manager is used to beneficially coordinate policies, operational parameters and other configuration information across each level of a network.

Modem network components have a variety of useful mechanisms designed to promote various beneficial results. Modem networks also use a broad variety of connectivity components, such as optical components and wired components. As used typically herein, network components that do not use optical network technology (e.g., passive optical network components) can be termed "non-optical" components. Embodiments herein describe different approaches for using universal network management approaches to coordinate these disparate parts of a network.

### Energy Consumption and Efficiency (ECE)

As used herein, energy consumption and efficiency (ECE) control mechanisms are used to refer to various techniques for controlling the energy consumption and efficiency of devices. Generally speaking, these ECE mechanisms are designed to reduce energy consumption and improve efficiency while maintaining an acceptable level of performance.

One example of a modem ECE control mechanism is the IEEE Std 802.3az (TM)-2010 standard, also known as Energy Efficient Ethernet, which is incorporated herein by reference. EEE is an IEEE standard that is designed to save energy in Ethernet networks on a select group of physical layer devices (PHYs). Example PHYs referred to within the EEE standard include the 100BASE-TX and 1000BASE-T PHYs, as well as emerging 10GBASE-T technology and backplane interfaces, such as 10GBASE-KR.

Conventionally, in networks having multiple diverse linked components with different mechanisms for improving performance, energy savings and efficiency can be implemented at every step. Three different types of mechanisms are discussed with embodiments herein: optical power savings, EEE mechanisms and traditional approaches such as device "power shedding." As would be appreciated by one having skill in the relevant art(s), given this description, the approaches detailed with embodiments herein are applicable to additional types of power savings.

For convenience, the term "EEE power savings" is used herein to describe savings approaches for electrical linking network components, *e.g.*, copper wire. Approaches discussed herein can also apply to non-electrical components as well, e.g., optical connections and components. It should be noted that approaches described herein can also apply to aspects of new networking standards, objectives and implementation approaches. Networking approaches developed by specific product vendors can also benefit from approaches, e.g., subrating.

Adding an additional layer of control, EEE capable devices can have their ECE features managed by a type of configuration instructions called a control policy. As discussed herein, a network power manager can generate control policies by considering different types of power information, *e.g.*, traffic patterns over time, traffic, performance characteristics, the type and profile of traffic and other relevant information to help decide when to utilize EEE features. Control policy generation may also be determined by looking at hardware subsystem activity as a proxy for actual traffic analysis. Broadly speaking, power information collected by embodiments can include network configurations, resource and power usage information for all network hardware, and software and traffic that is or could be relevant for ECE optimization.

For example, a control policy for a switch can describe when, and under what circumstances the switch enters and exits an energy-saving low power state. A control policy may be used to control one or more physical or virtual devices in a system. Control policies (also termed physical control policies or device control policies), for example, add an additional layer of control to EEE capable devices.

It should be noted that the principles of the present invention can be broadly applied to various contexts, such as in all PHYs that implement ECE (*e.g.*, backplane, twisted pair, optical, etc.). Moreover, the principles of the present invention can be applied to standard or non-standard (*e.g.*, 2.5G, 5G, 100M, 1G and 10G optical interfaces, PON, etc.) link rates, as well as future link rates (*e.g.*, 40G, 100G, 400G, Terabit etc.). Future expansions of standards such as IEEE 802.3 and IEEE P1904.1 may also benefit from approaches discussed herein. It should also be noted that the principles of the present invention can be applied to a given link either asymmetrically or symmetrically. The teachings herein are not intended to be limited to particular media type. In addition to those mentioned herein, other media types, both existing and non-existing, can also use the approaches herein, e.g., structured cabling, optical cabling, etc.

In an embodiment, one general approach to energy consumption and efficiency efforts taken by some embodiments, is to reduce the power consumed by as many network components/links as possible for as long as possible. As noted above, if not managed effectively, this goal can result in unacceptable performance loss in the network. For example, each device that is powered down—either into a sleep mode or a low power state—must be awakened within a reasonable time to perform required functions.

### Network Overview

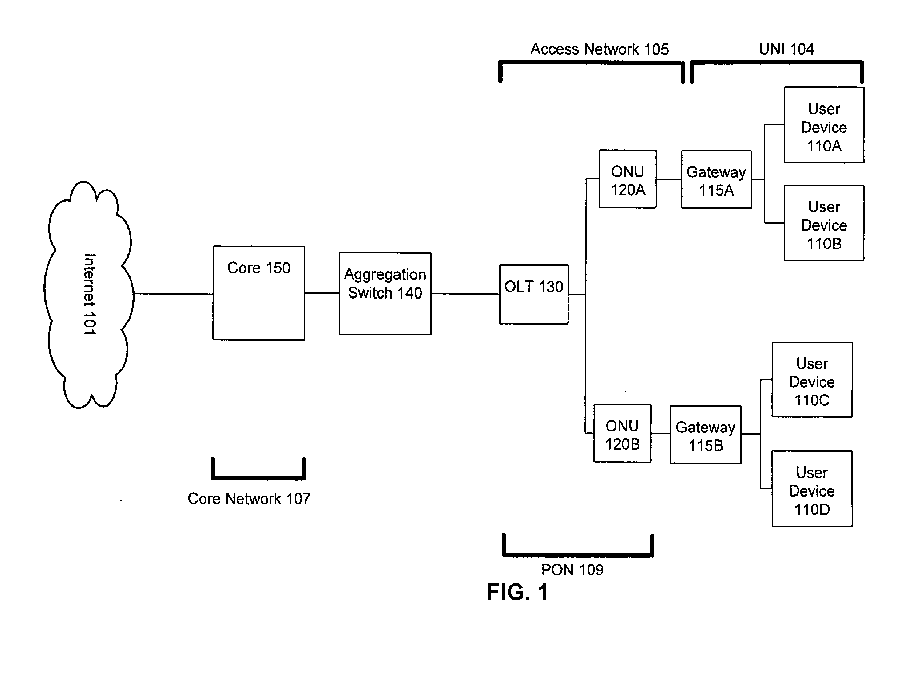

In FIG.1, topology 100 depicts user to network interface (UNI) 104 coupled to access network 105, which is coupled to core network 107. UNI 104 includes gateways 115A-B and users devices 110A-D. Access network 105 includes passive optical network (PON) 109, such PON 109 having optical line terminal (OLT 130) coupled to optical network units (ONU) 120A-B. Aggregation switch 140 links core network 107 to access network 105, and core network 107 is linked to Internet 101. As noted, topology 100 has both optical networking components and wired networking components.

With respect to topology 100, non-limiting items A1-A10 listed below would be appreciated by one having skill in the relevant art(s), given the description herein:

A1. Access network 105, as discussed with some embodiments herein, is that part of a communications network which connects subscribers, using user devices 110A-D, to their service provider, such provider operating OLT 130, ONUs 120A-B and core 150. As would be appreciated by one having skill in the relevant art(s), the approaches detailed by embodiments herein can apply to a variety of different network topologies and configurations. Though topology 100 is depicted as having an optical (fiber optics) component, the teachings herein are not intended to be limited to one type of network. Other types of networks, both existing and yet to be invented, can also use the approaches herein, e.g., digital subscriber lines, and DOCSIS cable modems.

Broadly speaking, approaches described herein can apply to any type of PON. For example Gigabit PON (GPON), Ethernet PON (EPON) and Wavelength Division Multiplexing PON (WDM PON). Also, approaches use PON protocols in non-optical networks can benefit from approaches described herein. For example Ethernet Passive Optical Network Over Coaxial (EPOC). The power information and configuration instructions described herein can be applied by one having skill in the relevant art(s), with access to the teachings herein, to different types of networks, not specifically discussed herein.

A2. As with other components and examples discussed herein, PON 109, having optical networking components OLT 130 and ONU 120A-B, is an example network type for an embodiment. As would be appreciated by one having skill in the relevant art(s), non-optical networks can also benefit from some of the teachings herein.

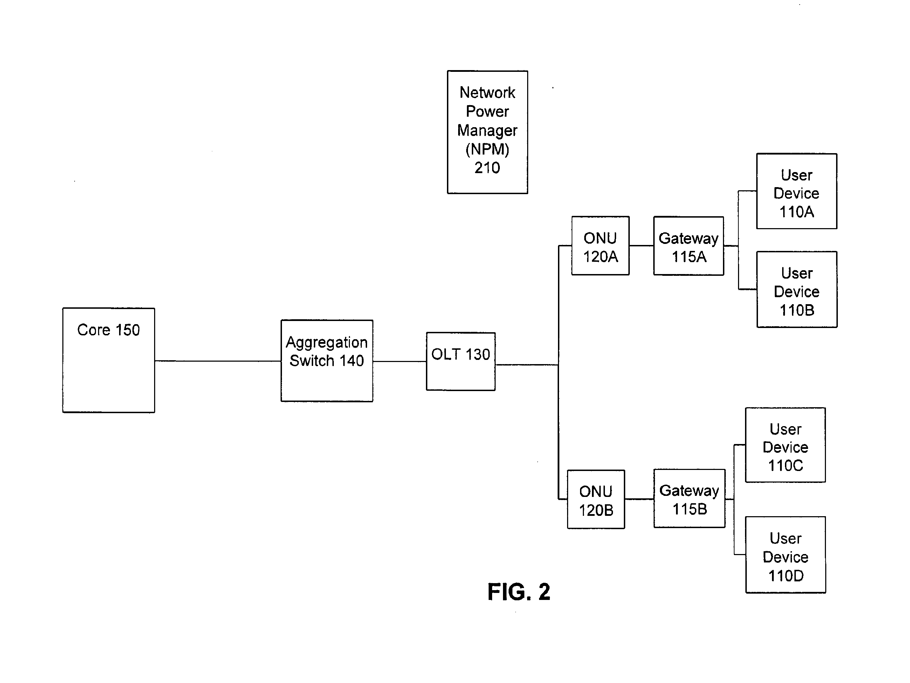

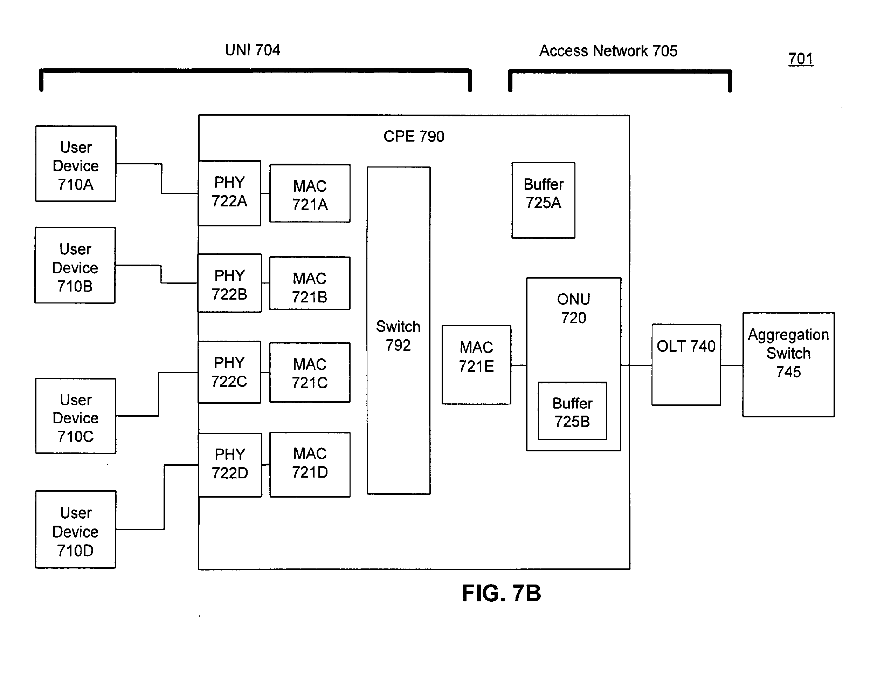

A3. ONUs 120A-B are typically installed at a subscriber's house, and provide an interface between the optical data transfer of PON 109, and the wired/WiFi Ethernet transfer of data within and from the subscriber household. In FIGs. 1-2, ONUs 120A-B are shown as directly coupled to gateways 115A-B. In a typical implementation, a media converter then a CPE (Customer Premise Equipment) device are used to link an ONU to a gateway. In many implementations, all these functions can be in one box. FIGs. 1 and 2 simplify the diagram by omitting these components. To provide further detail, the discussion of FIG. 7B below describes an embodiment having a CPE component coupled to user devices.

A4. It should be appreciated that aggregation switch 140, while depicted and discussed as a single aggregation switch 140, can be a collection of switches designed to optimize the linkage between downstream components, such as OLT 130 and upstream components, such as core 150.

A5. User devices 110A-D herein refer to end-user devices coupled as an end point to access network 105. Examples include personal computers and other network enabled devices.

A6. Gateways 115A-B provide an interface for the end-user devices 110A-D. Examples include cable modems, set-top boxes, and media over cable (MOCA) interfaces.

A7. Core 150, also known as a network core, is a term associated primarily with telecommunications networks. This non-limiting term is used generally to refer to the network infrastructure linking a service provider to Internet 101. Core 150 can also be the site of major switching, routing and data processing functions for the network.

A8. As with the other figures included herein, the network components depicted on FIG. 1 are intended to provide a non-limiting illustration of one example of linked network components and are not intended to depict a required topology.

A9. The links between user devices 110A-D, gateway 115A-B and ONUs 120A-B are generally electrical (*e.g.*, copper-based, WiFi). Such links are currently able to have EEE power savings approaches implemented. These components and links from ONUs 120A-B can be termed a user-to-network interface (UNI 104).

A10. The links between ONU 120A and OLT 130 are optical (fiber optic) based links and can have optical power saving approaches applied thereto. These optical networking components can be implemented in a passive optical network (PON 109) structure.

### Network Power Manager

FIG. 2 adds integrated network power manager 210 to topology 100 from FIG. 1. An embodiment of NPM 210 can provide a higher view of how the links and network components of topology 100 are related, and also allow management of the included components.

As described above, conventional approaches to ECE in a network do not provide end-to-end management of network components. This lack of ECE management is especially important with respect to effecting ECE improvements. In topology 100 for example, there is no central management of different ECE capabilities, control policies and other power conservation features of different network components. As discussed herein, by collecting power information, analyzing the power information and generating configuration instructions, an embodiment of NPM 210 is designed to address many of these problems. Stated another way, in an embodiment, it is a feature of NPM 210 to collect the physical characteristics and ECE logic of associated network components and then implement changes in order to improve ECE.

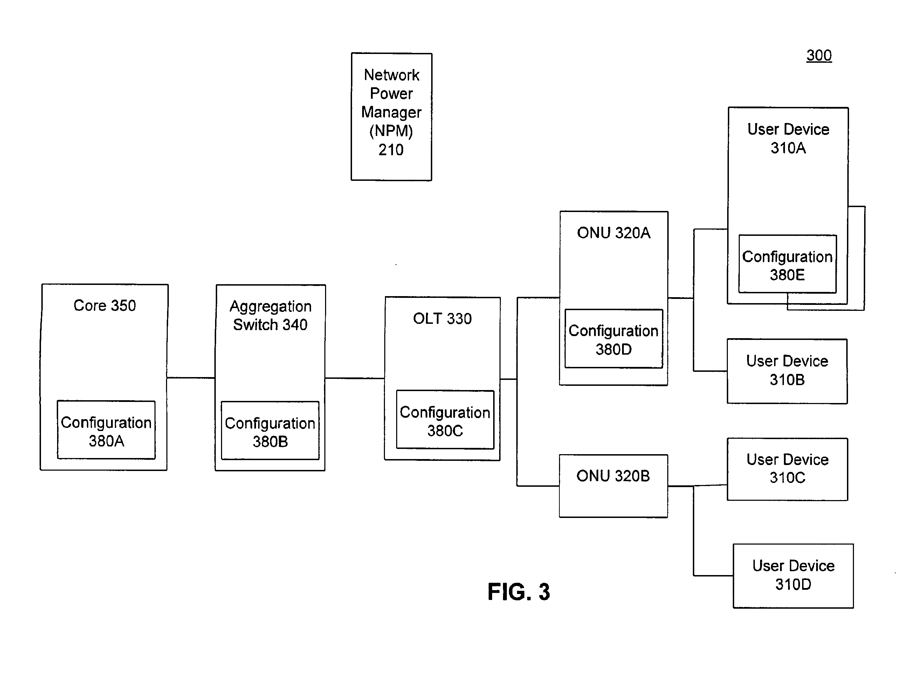

FIG. 3 depicts network topology 300 having core 350, aggregation switch 340, OLT 330, ONU 320A, user device 310A, each having respective configurations 380A-E. Topology 300 is also depicted as having network power manager (NPM) 210.

Generally speaking, NPM 210 is communicatively coupled to one or more network components and receives or collects power information from the network components. This power information will be discussed further below. After collecting power information, NPM 210 analyzes the power information and generates configuration instructions based on the analysis. These configuration instructions, discussed further below, are then relayed to the respective network components.

The analysis and generation features described above can balance the power information against other network considerations, *e.g.*, performance, security, etc. In an embodiment, NPM 210 improvement of ECE performance can be balanced, coordinated with and otherwise affected by, other performance characteristics and goals set for the network.

Any characteristics available to NPM 210 or similar components can be analyzed and used to generate configuration instructions. In an embodiment, the NPM 210 is designed to be a unifying resource to promote ECE with respect to topology 300, and acts to coordinate the capabilities of different network components with different ECE goals across the entire network.

Configuration instructions include all potential parameters, settings, configurations, and other similar characteristics for network components. As noted above, in conventional networks, there is no end-to-end management unifying configurations 380A-E.

In generating configuration instructions, NPM 210 can receive various types of energy/power-relevant information (power information) about network components. Examples of this power information include physical layer (PHY) information, link information, ECE control policy information and application information. One having skill in the relevant arts, with access to the teachings herein, will appreciate that a broad range of information, characteristics, policies, etc., will qualify as power information as used herein.

Physical layer (PHY) information can relate to the operational characteristics or capabilities of a network component itself, including characteristics such as the supported link rates available to the network component, the different modes of operation (*e.g.*, subset modes) available to the component, etc.

Link information can relate to the utilization of the links between network components. An example of link information is traffic buffer fullness. In another example, the link information can include burstiness parameters (*e.g.*, size of the bursts on the link, time between bursts, idle time on the link, etc.) that enable a determination of the actual link utilization. Another example is the percentage of link capacity usage over time, *e.g.*, if the average usage of 10G link is always less than 1G over a period of time, then this can be a useful measure of link utilization.

ECE policy parameters can relate to those parameters that can govern the analysis and/or operation of the control policy set for a network component. When a network component is configured, for example, policy parameters can be set to govern the ECE operation of the device, including link utilization thresholds, IT policies, user parameters, etc. Finally, application information can relate to the characteristics of the system applications that can govern the operation of network components. An example of useful application information includes the streams running through an analyzed network component, *e.g.*, in a L2 switch without virtualization, awareness of an AVB stream that is running through the component can be useful in helping to determine whether lower power states are useful.

As should be appreciated, the specific set of power information received, the analysis performed on the power information and the process of generating configuration instructions based on the power information would be implementation dependent. Regardless of the data collected and the analysis mechanisms used, it is significant that NPM 210 is consolidating, analyzing and utilizing power information from network components to guide the configuration of specific components, and generally over all network configuration and routing/switching.

Power information can be determined for components in a variety of ways. In an approach used by an embodiment, a representative sample of network components is monitored and the metrics collected are extrapolated to other components in a network. An example of this extrapolated power information approach can be found in U.S. Patent Appl. No. No. 12/947,537 (Atty. Docket #2875.4830000), which is entitled "Measuring and Managing Power Usage and Cooling in a Network" filed November 16, 2010 and is incorporated herein by reference in its entirety.

In another example, NPM 210 can collect power information from ONU 320A-B, OLT 330 and aggregation switch 340. Such information can include, non-limiting example types T1-T3:

T1: Operational characteristics such as wakeup times, link speeds, buffer sizes, manufacturer, generation of device, where device is placed on the network and configuration options.

T2. Implemented policy information such as sleep triggers and buffering requirements.

T3. Control policy settings, such as how aggressive energy saving policies are set, timers, etc.

As would be appreciated by one having skill in the relevant art(s), given the description herein, additional physical and logical characteristics of network components can provide useful information for generating configuration instructions.

It should also be noted that the term "power" in network power manager (NPM) 210 in not intended to be limiting if the management capabilities of embodiments. While energy consumption and efficiency (ECE) mechanisms and policies are discussed herein with embodiments, other types of policies, mechanisms, goals, approaches, etc., can be implemented using the teachings outlined with embodiments herein.

### Placement of a Network Power Manager

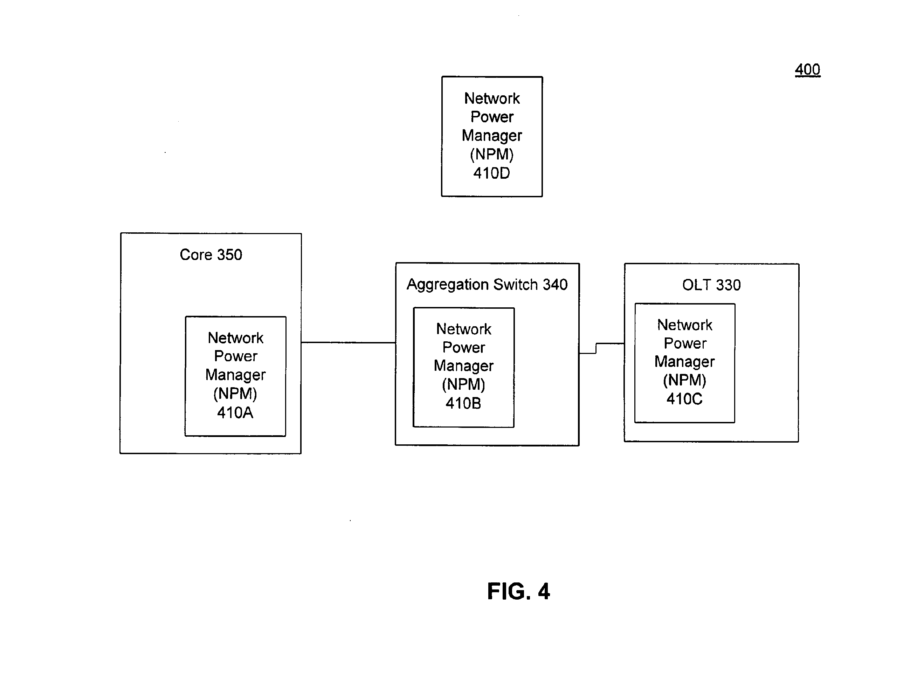

FIG. 4 illustrates system 400 with alternative physical and logical configurations for different embodiments of NPM 210 from FIG. 2. Each depicted placement of NPM 410A-D is intended to be non-limiting, and present a placement that can function independently or in coordination with other NPM 410A-D components. For example, system 400 could have a single NPM 410A, two NPMs 410A-B, all four NPMs 410A-D components, or a configuration with network components not shown.

In an embodiment, instead of the external placement illustrated on FIG. 2, NPM 410A is depicted on FIG. 4 placed as a component of core 350. As described above, NPMs 410A-D can be implemented in different network devices, *e.g.*, aggregation switch 340, OLT 330, ONU 320A (not shown), user devices 310A-D and other components of topologies 300 and 400. An embodiment of NPMs 410A-D may be implemented as either a software or hardware component.

NPM 410B is depicted on FIG. 4 placed as a component of aggregation switch 340. Integration into switches/routers can be accomplished as a software component or "plug-in" or as a hardware implementation. As would be appreciated by one having skill in the relevant art(s), other software and hardware implementations are also possible.

NPM 410C is depicted on FIG. 4 as placed as a component of OLT 330. In another embodiment, NPM 410D is depicted independent of the shown conventional network components.

In an embodiment, NPM 210/410 does not need to be directly coupled to a network component in order to collect power information and send configuration instructions to the components. As would be appreciated by one having skill in the relevant art(s), different network protocols can be used to perform these collection and command functions. In an example discussed further below, Link Layer Discovery Protocol (LLDP) can be used to collect configuration/policy information and characteristics from network components and simple network management protocol (SNMP) can be used both to collect information and issue configuration instructions.

The placement illustrations of FIG. 4 are not intended to be limiting. One having skill in the relevant art will appreciate that the functions of NPMs 410A-D as described can be located in various positions within the systems described herein, implemented as either software or hardware, or a combination of the two. It is important to note that the logic and functions of NPMs 210, 410A-D do not need to be centralized in a single component, rather the logic and functions of embodiments described herein can be distributed throughout components of the network.

Examples of the collection of power information, the analysis of the power information and the generation and distribution of configuration information is described further below.

### NPM Collection and Control Mechanisms

As would be appreciated by one having skill in the relevant art(s), NPM 210 can collect power information from network components in a variety of ways. Embodiments can collect power information both in real time and at specific points, such as deployment of the network component or change of the network component configuration.

An embodiment can use aspects of conventional data collection protocols, such as Link Layer Discovery Protocol (LLDP). In contrast to the traditional use of these conventional protocols, some embodiments use LLDP to collect information from throughout the network. One way to accomplish this expansion of function is to use LLDP to pass and aggregate power information from component to component, until the information reaches NPM 210.

Conventional protocols can also be used to both collect power information and distribute configuration instructions. Simple Network Management Protocol (SNMP) allows power information and configuration instructions to be sent over the network to and from NPM 210 and network components.

In an embodiment, a profile and an associated management information block (MIB) are used by SNMP to provide end to end management of network components. For each network component, NPM 210 creates and maintains a profile that can be embodied in a MIB and transferred by SNMP. A profile could be created and referenced by NPM 210 when implementing individual and general configuration instructions.

In an example, a service provider can have ONU 320A installed at a client site, such network device requiring an initial ECE configuration. Having a profile managed by NPM 210 using SNMP, allows the service provider to know the characteristics of the device and program certain parameters for the device. An example parameter is, an EEE policy in ONU 320A to buffer each received packet for 1 millisecond before sending a packet to the access portion of the network. Because NPM 210 has profiles for other components in the system, the example policy can be integrated with those of other components. For example, OLT 330 can have a policy that considers the 1 millisecond 320A requirement.

### Examples

Some embodiments described herein, by collecting power information from network components, allow for the generation of configuration instructions to coordinate operational parameters, policy-based parameters, and maintenance and management related parameters for network components.

Coordinated configuration can be based on a central power saving policy where configuration parameters such as sleep cycle interval, active cycle interval, service dependent configuration, are centrally managed by NPM 210 for multiple power saving mechanisms. This coordination can improve the likelihood that configuration parameters on different network devices will work together.

An embodiment can collect, analyze and coordinate configuration information for trigger events (triggers) across different network devices. This analysis considers the rules and criteria for each power saving mechanism on each device to enter and wake up from sleep cycles. Embodiments can also use the sleep/active status of one power saving mechanism as trigger for other relevant power saving mechanisms.

Because of the conventional approaches noted above, many different conventional types of energy consumption, efficiency and performance characteristics can be improved by the coordination provided by embodiments. The following non-limiting list P1-P6 is intended to outline some of these characteristics. One having skill in the relevant art(s), with access to the teachings herein, will appreciate that additional sub-optimal characteristics can also be solved by embodiments. Problem characteristics can include:

P1. Latency - This being a time delay experienced in a system during the transmission of information. Latency has significant impact to subscriber service level agreements (SLAs), in particular, to time critical services such as voice and video.

P2. Jitter (latency variation) - This being a variation in the amount of latency over time. For example, instead of having a constant latency, in systems with jitter, the latency varies. As would be appreciated by one having skill in the relevant art(s), this variation can cause significant problems for certain sensitive applications, such as voice over IP (VoIP) and video.

P3. Excess component resource requirements - Different types of network components have different resource characteristics, e.g., the size of their buffers. Different components can have different cost characteristics associated with changing their resource capabilities. In an example, it is more expensive to add buffer size resources to aggregation switch 140 than it is to add it to a user device 110A. A potential suboptimal characteristic of a network is the misallocation of performance requirements to components with higher resource costs. For example, having a policy that tasks aggregation switch 140 with heavy buffering requirements as compared to user device 110A.

P4. Different Optimizations - In topology 100, for example, each of the network components shown may or may not have any ECE mechanisms. If mechanisms are present, they may be incompatible and uncoordinated. Every link in the network can have their own ECE policy.

P5. Uncoordinated ECE mechanisms - In a network where ECE mechanisms are uncoordinated, each network component only sees traffic in "real time"—waking up, for example, only when new traffic arrives, not when the traffic is in transit from upstream devices. As traffic waits for a network component to be awakened from ECE sleep, the traffic must be buffered and latencies are added at each delayed step. At worst, different types of network components can add different, unpredictable latencies. Such unpredictability in buffering and latencies can contribute to the jitter described in P2 above.

NPM 210 has control over sleep characteristics for links between components. By synchronizing sleep cycles, embodiments help to ensure that when a primary power saving mechanism, such as optical sleep, enters sleep mode, all other power saving mechanisms will advantageously adjust. In an example of coordinated sleep modes, other network devices can be configured to also enter sleep mode immediately; and when the primary power saving mechanism wakes up, all other mechanisms will also wake up immediately.

P6. Speed mismatches in the network caused by oversubscription. An embodiment, by centrally managing configuration instructions for network components, can address speed mismatches before they have negative effects, *e.g.*, jitter.

In an embodiment, NPM 210 is able to control a network component and cause a wake-up event when traffic is approaching from a node that is steps away on the network. In addition, in another example NPM 210 has data corresponding to the speed of the links. In an embodiment, if traffic warrants, NPM 210 can selectively subrate the link, slowing down the link and saving energy.

Some embodiments described herein both improve existing ECE mechanisms used in network components, and enable the implementation of new ECE mechanisms.

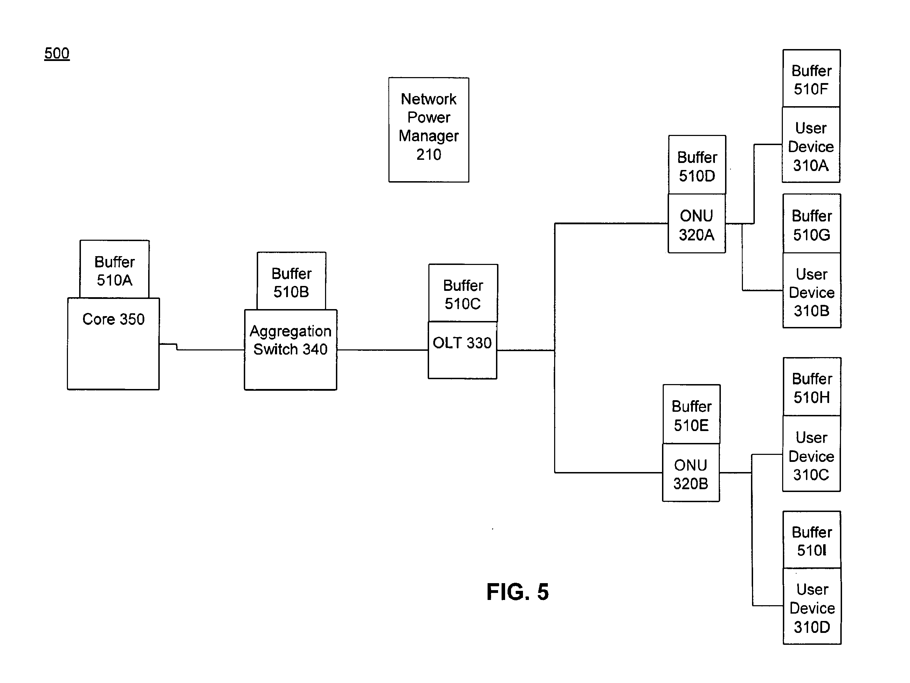

FIG. 5 depicts an example of a benefit of management by network power manager 210. As depicted on FIG. 5, core 350, aggregation switch 340, OLT 330, ONUs 320A-B and user devices 310A-D are shown associated with 510A-I respectively.

As would be appreciated by one having skill in the relevant art(s), when multiple power saving mechanisms are uncoordinated and unsynchronized as described above, a packet may be buffered twice or more times due to uncoordinated sleep cycles under different power saving mechanisms. As a result, latency is increased by the combined amount of sleep cycles.

In an embodiment, by the centralized management described above, NPM 210 enables the pooling of buffer times into fewer network components, and the creation of a uniform buffering system for the network. Having fewer network components performing buffering functions can result in less latency/jitter because much of the "real time" processing described above is not required. Such pooling can result in advantageous results in performance, ECE and network implementation cost. In an embodiment, when power saving mechanisms are coordinated and synchronized, the latency generated is only that resulting from the longest sleep cycle, instead of the sum of the multiple sleep cycles as in conventional approaches.

In an embodiment, additional advantages can be achieved by pooling the buffering as close to the user devices 310A-D as possible. As is discussed below, user satisfaction, performance and cost savings can all result from pooling buffer times at the user device 310A-D (*e.g.*, subscriber) level. As would be appreciated by one having skill in the relevant art(s), given the description herein, it is much easier to pause traffic at the source than to buffer it farther up a traffic path.

In an embodiment, user device 310A-D buffer pooling is accomplished using the following steps D1-D5:

D1. As user device 310A is generating network traffic, network power manager 210 is receiving power information from all connected components along the upstream path, *e.g.*, core 350, aggregation switch 340, OLT 330 and ONU 320A. Such updates received from the components (transmission information) contain information such as: the current status of the component (*e.g.*, sleeping or active) and an estimated buffer time required for active transmission through the device.

In an example, aggregation switch 340 is currently in a sleep state and has an ECE policy whereby all traffic is buffered in buffer 510B for 500 microseconds before transmission to core 350, and the sleep state requires 200 microseconds for wake-up. Thus, in this example aggregation switch 340 conventionally requires 700 microseconds for wakeup and transmission from its current sleep state. As would be appreciated by one having skill in the relevant art(s), with access to the teachings herein, a variety of different conditions, policies, delays, can influence the estimated buffer time of a component.

D2. This information is collected by network power manager 210, along with similar information from other network components. In one embodiment the component would receive the determined wakeup times, in another embodiment, network power manager 210 would receive the status, governing ECE policy and configuration information, and calculate the wakeup time therefrom. An embodiment can use Link Layer Discovery Protocol (LLDP) to collect information from different network components.

D3. Network power manager 210 aggregates the received updates from connected/capable network components. If a network component on the traffic path from user device 310A to core 350 is not able to generate the required information, in an embodiment, network power manager is able to estimate the transmission information based on the type of component and other characteristics.

D4. In an example, once the transmission information is aggregated, the total estimated upstream buffering time is relayed to user device 310A. According to an embodiment, this buffer time can be implemented as a buffering policy on user device 310A using buffer 510F. Using ECE coordination, instead of serializing (500+200) the buffering at 700 microseconds, buffering times could be combined (parallel) to be set to 500 microseconds.

D5. Continuing the example, once the buffering time is implemented on user device 310A, NPM 210 can manage network components to change their implemented policies. This change is made so that the policy on the network component does not conflict with the buffering policy implemented on user device 310A. At least three benefits can result from the above-described ECE coordination: 1) Overall latency is lower, (instead of 500+200, only 500 is required), 2) Overall sleep in the system is higher and more contiguous (so more opportunity to save energy), and 3) Because buffering does not have to be replicated, buffering requirements overall are lower.

Some embodiments, by moving caching events downstream to user devices 310A-D, can also result in significant network resource cost savings. As would be appreciated by on having skill in the relevant art(s), with access to the teachings herein, the implementation of network component cache on an access network becomes increasingly expensive the closer a component is to core 350. For example, to implement cache memory in aggregation switch 340 sufficient to handle caching for all downstream components (OLT 330, ONU 320A and user devices 310A-D) is far more expensive than implementing caching at each user device 310A-D.

In an embodiment, by implementing the downstream cache pooling described above, upstream buffers 510A-E, can be eliminated or reduced in their respective components.

In most access networks also, the cost of implementing cache memory (*e.g.*, system RAM, hard drive space) is borne by the subscriber, not the service provider. When caches are implemented by individual subscribers, each subscriber can choose how much cache space they want available—with concomitant increases in cost and performance. In another embodiment, a service provider could have different pricing tiers for subscribers based on caching policies and other energy conservation and efficiency considerations.

Finally, caching implemented at user devices 310A-D is virtually unlimited—allowing for use of a local hard drive as an overflow cache.

In another cost savings benefit of an embodiment, having a better coordination of the ECE mechanisms of different types of network components can allow network designers to choose less expensive components for tasks requiring high performance. Elaborating further, as would be appreciated by one having skill in the relevant art(s), for a given required wakeup time from a sleep or low power state, certain components can be less expensive for the same performance.

For example, an optical component can be more expensive for a given waking performance than an electrical (wired) linking component. Having integrated control over the range of network components as described by some embodiments herein, can allow a network designer to choose, for example, to place the wired component in the critical path and requiring it to have a quick wakeup. In this way, some embodiments facilitate the beneficial integration of different types of networking components, such as optical and electrical/electromagnetic components. Embodiments, by using techniques such as early-wakeup notification can reduce the burden on all system components.

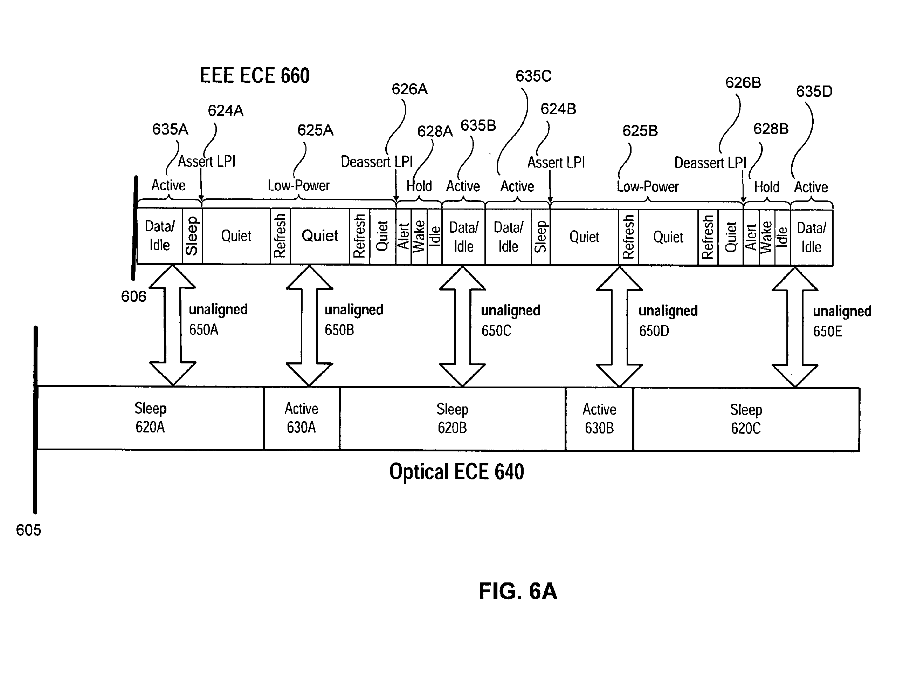

FIGs. 6A-B depicts a timeline showing an example EEE ECE 660 power saving mechanism and an optical ECE 640 power saving mechanism. In this example, EEE ECE 660 is implemented in UNI 310A in user device 310A. Optical ECE 640 in this example is in ONU 320A, and controls the optical connection between OLT 130 and ONU 120A.

As would be appreciated by one having skill in the relevant art(s), the EEE energy consumption and efficiency (EEE ECE 660) mechanism as depicted uses a low-power idle state 625A-B, an active state 635A-D and a hold 628A-B state to promote ECE. Similarly, optical ECE 640 uses a sleep 620A-B state (optical sleep), and an active 630A-B state.

FIG. 6A depicts non-limiting examples of conventional, uncoordinated ECE mechanisms—unaligned 650A-E. In the example shown, starting at point 605, ONU 320A has been directed to enter a sleep 620A state. At 635A, user device 310A enters an active state, processing packets for sending upstream. At point 606, user device 310A, is active 635A and requires a transmission to ONU 320A. At the point of transmission however, ONU 320A is depicted in sleep 620A state—thus resulting in unaligned 650A. In this example, ONU 320A receives the network traffic and buffers it for transmission.

Other example uncoordinated mechanisms M1-M4 are listed below and are depicted on FIG 6A.

M1. Unaligned 650B occurs when active 630A state in ONU 320A occurs at the same time as low power state 625A state in user device 310A.

M2. Unaligned 650C occurs when ONU 320A is at sleep state 620B, when EEE ECE 660 on user device 310A is shown in active states 635B-C.

M3. Unaligned 650D occurs when ONU 320A is at active state 630B, when EEE ECE 660 on user device 310A is shown in low power state 625B.

M4. Finally, unaligned 650E occurs when ONU 320A is at sleep state 620C and user device 310A is depicted as in active state 635D.

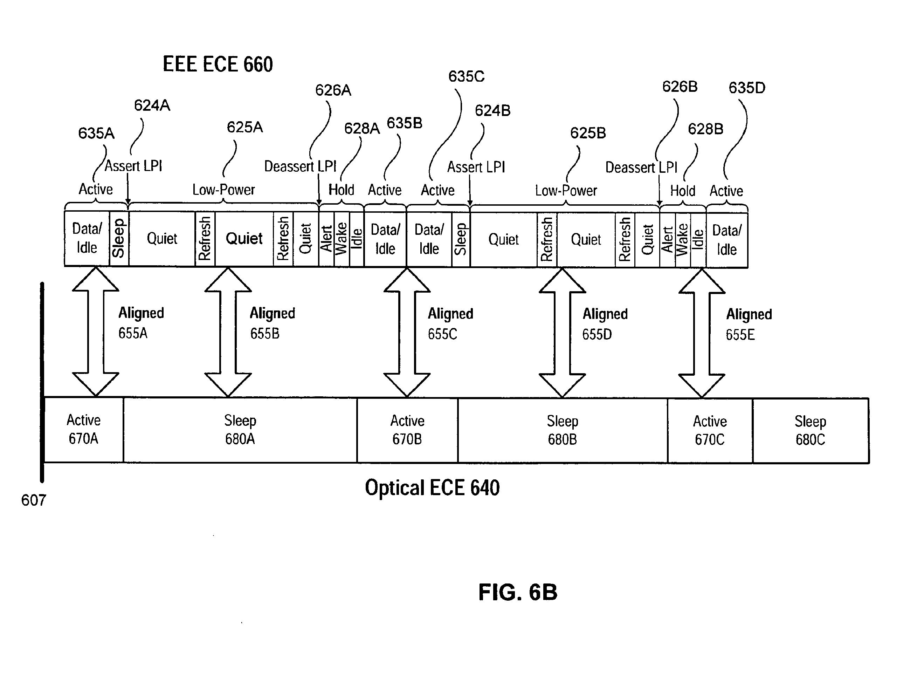

At FIG. 6B, an embodiment of NPM 210 has aligned the sleep cycles of optical ECE 640 and EEE ECE 660, thus depicting aligned examples 655A-E. In the example shown, starting at point 607, ONU 320A has been directed to enter active state 670A. At 635A, user device 310A enters an active state, processing packets for sending upstream. When user device 310A is in active state 635A and requires a transmission to ONU 320A, ONU 320A is also in an active state (670A)—thus resulting in aligned 655A condition. In this example, ONU 320A receives the network traffic does not have to buffer the traffic before transmission.

Other example coordinated mechanisms C1-C4 are listed below and are depicted on FIG 6B.

C1. Aligned 655B occurs when sleep 680A state in ONU 320A occurs at the same time as low power state 625A in user device 310A.

C2. Aligned 655C occurs when ONU 320A is at active state 670B, when EEE ECE 660 on user device 310A is shown in active states 635B-C.

C3. Aligned 655D occurs when ONU 320A is at sleep state 680B, when EEE ECE 660 on user device 310A is shown in low power state 625B. By having coordinated data about low-power state 625B and optical sleep 680B, additional power control options can be implemented. Power-shedding capable devices, for instance, can perform higher degrees of power shedding, resulting in better power savings.

C4. Finally, aligned 655E occurs when ONU 320A is at active state 670C and user device 310A is depicted as active 635D.

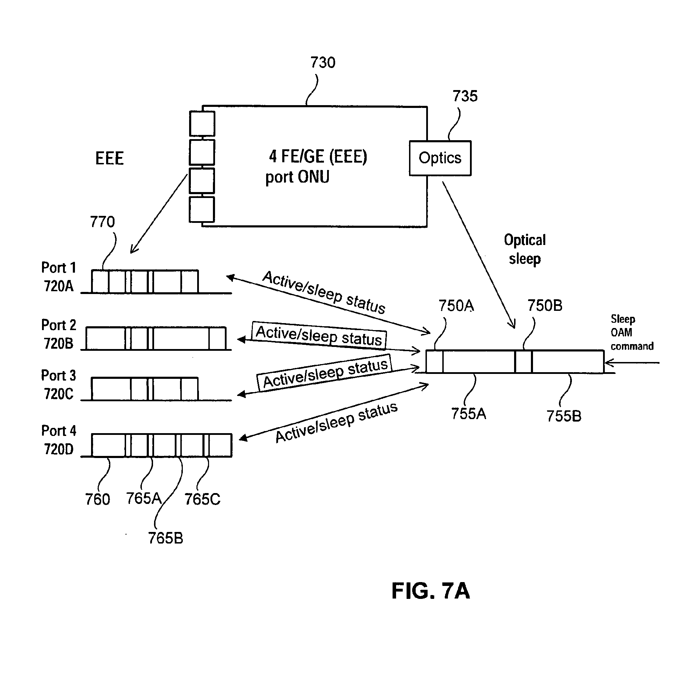

FIG. 7A depicts ONU device 730 having optics 735 and four ports having electrical—cabled/wired—connections (720A-D). Optics 735 has active modes 750A-B and optical power savings implemented during sleep modes 755A-B. Similarly, each port 720A-D has active modes 765A-C, and sleep modes 760. In an embodiment, port 720A includes sleep 770, such sleep being implemented on different ports 720A-D based on communication from ECE control mechanisms.

FIG. 7B depicts network topology 701 having UNI 704 and access network 705 labeled. Network topology 701 includes user devices 710A-D coupled to customer premises equipment (CPE) 790. CPE 790 is a single physical component and has PHYs 722A-D, MACs 721A-E, switch 792, MAC 721E, buffer 725A and ONU 720. Network topology 701 further includes OLT 740 and aggregation switch 745.

In an example UNI 704 configuration, MACs 721A-D can run at gigabit speeds and be coupled to PHYs 722A-D in CPE 790. PHYs 722A-D are triple speed PHYs running in 1000BASE-T with EEE enabled. User devices 710A-D are also capable of EEE and can have their own PHYs as well as buffering in the system.

In an example access network configuration, MACs 721A-D in CPE 790 are coupled to ONU 720 via switch 792 and MAC 721E. ONU 720 is an EPON ONU capable of sleeping/energy savings and buffering using buffer 725B. OLT 740 is coupled to aggregation switch 745. The OLT 740 and aggregation switch 745 functions can also be combined into a single physical component.

One goal of an embodiment is to coordinate energy savings protocols on access network 705 with components in UNI 704. ONU 720, switch 792 and PHYs 722A-D are in one CPE 790 device. As noted in above examples, notwithstanding the physical integration of these components in CPE 790, inefficiencies can result when independent protocols and uncoordinated connections are used to relay traffic. Each time network traffic transitions from one domain to another (e.g., from access network 705 to UNI 704) these inefficiencies can result.

As discussed with the descriptions of FIGs. 6A-B and 7A above, using ECE control mechanisms to align the active/sleep states of optical and non-optical components in network topology 701 can result in higher levels of performance and lower power consumption. For example, the active/sleep cycles of ONU 720 can be aligned with PHYs 722A-D and user devices 710A-D using ECE mechanisms. In addition, ONU 720 can coordinate cycles with OLT 740.

### Methods

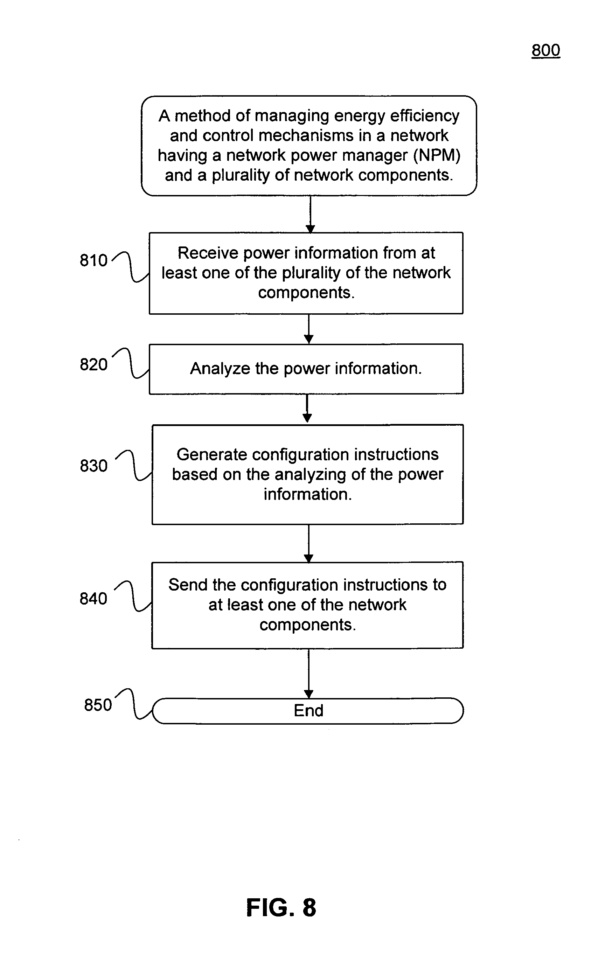

This section and FIGs. 8-11 summarize the techniques described herein by presenting flowcharts of example methods of managing energy efficiency and control mechanisms in a network having a network power manager (NPM) and a plurality of network components.

FIG. 8 presents a method 800 of managing energy efficiency and control mechanisms in a network having a network power manager (NPM) and a plurality of network components, such method is described with respect to the NPM receiving and processing power information for at least one network component, and is not meant to be limiting.

As shown in FIG. 8, an embodiment of method 800 begins at step 810 where power information is received from at least one of the plurality of the network components. In an embodiment, NPM 210 receives power information, such as ECE information discussed above, from aggregation switch 130 and ONUs 120A-B from FIG. 2. Examples of this power information include physical layer (PHY) information, link information, ECE control policy information and application information. Once step 810 is complete, method 800 proceeds to step 820.

At step 820, the received power information is analyzed by a NPM 210. In an embodiment, the power information includes the ECE information from aggregation switch 130 and ONUs 120A-B. Once step 820 is complete, method 800 proceeds to step 830.

At step 830, configuration instructions are generated based on the analyzing of the power information. In an embodiment, configuration instructions are generated by NPM 210 for at least one of the network components (e.g., aggregation switch 130 and ONUs 120A-B) from which power information was collected. Once step 830 is complete, method 800 proceeds to step 840.

At step 840, the configuration instructions are sent to at least one of the network components. In an embodiment NPM 210 sends the configuration instructions generated for aggregation switch 130 and ONUs 120A-B to each respective network component. Once step 840 is complete, method 800 ends.

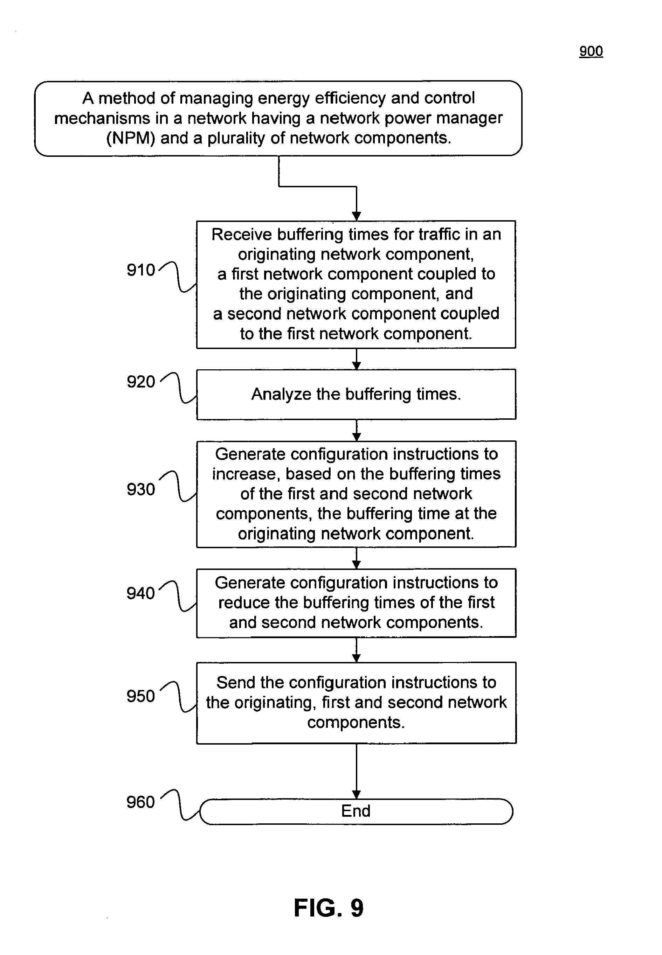

FIG. 9 presents a method 900 of managing energy efficiency and control mechanisms in a network having a network power manager (NPM) and a plurality of network components. The method is described with respect to receiving and processing buffering information from various network components, and is not meant to be limiting.

As shown in FIG. 9, an embodiment of method 900 begins at step 910 where buffering times for traffic for an originating network component, a first network component coupled to the originating component, and a second network component coupled to the first network component. In an embodiment, NPM 210 receives buffering times for the following: an originating component, *e.g.*, user device 310A; a first network component, *e.g.*, ONU 320A; and a second network component, *e.g.*, OLT 330. Once step 910 is complete, method 900 proceeds to step 920.

At step 920, the received buffer times are analyzed. As noted above, user satisfaction, performance and cost savings can all result from pooling buffer times at the user device 310A (*e.g.*, subscriber) level, since it is much easier to pause traffic at the source (user device 310A) than to buffer it farther up a traffic path, *e.g.*, at ONU 320A or OLT 330. As an illustration provided for example purposes only, the received buffer times could include: user device 310A (100 microseconds), ONU 320A (200 microseconds) and OLT 330 (500 microseconds), all of which are analyzed by NPM 210. Once step 920 is complete, method 900 proceeds to step 930.

At step 930, configuration instructions are generated to increase the buffering time at the originating network component, based on the buffering times of the first and second network components. Using the buffering times of the upstream components (ONU 320A and OLT 330), NPM 210 generates a configuration instruction to increase the buffering time of the originating network component, e.g., user device 310A. In this example, the configuration instructions are generated by NPM 210 to increase the buffering time of user device 310A by a value corresponding to the sum of the buffering times of ONU 320A (200 microseconds) and OLT 330 (500 microseconds), or 700 microseconds in this case. Once step 930 is complete, method 900 proceeds to step 940.

At step 940, configuration instructions are generated to reduce the buffering times of the first and second network components. Based on the current example, the buffering times of the upstream components, e.g., ONU 320A (200 microseconds) and OLT 330 (500 microseconds) are reduced to a minimal value. Once step 940 is complete, method 900 proceeds to step 950.

At step 950, configuration instructions are sent to the originating, first and second network components. In an embodiment, the generated configuration instructions are sent to user device 310A, ONU 320A and OLT 330. Once step 950 is complete, method 900 ends at step 960.

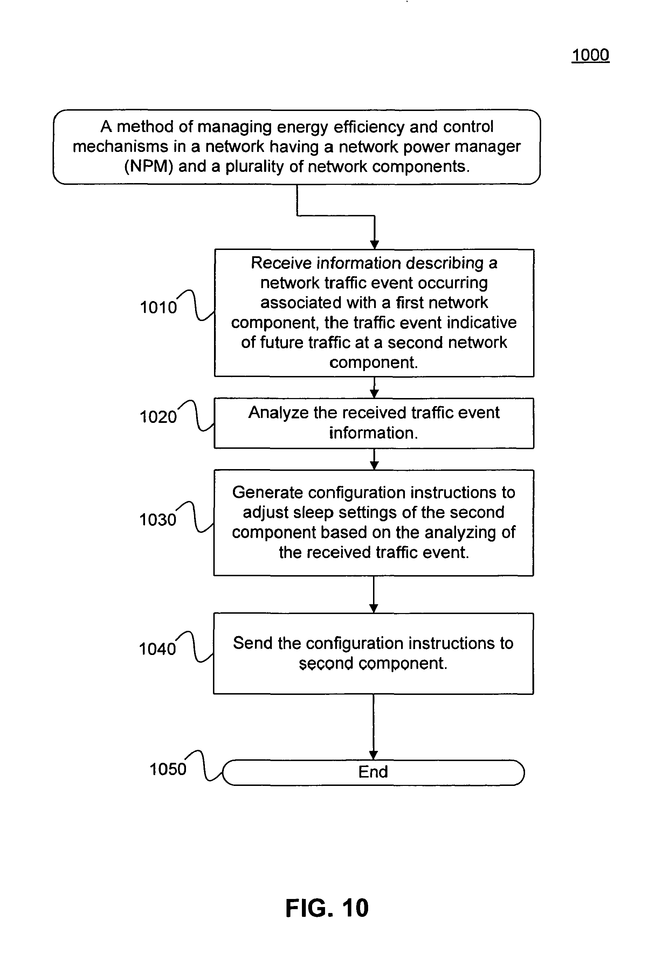

FIG. 10 presents a method 1000 of managing energy efficiency and control mechanisms in a network having a network power manager (NPM) and a plurality of network components, such method described with respect to receiving and processing future traffic information, and is not meant to be limiting.

As shown in FIG. 10, an embodiment of method 1000 begins at step 1010 where information describing a network traffic event that is associated with at least a first network component is received, where the network traffic event is indicative of future traffic at a second network component. For example, NPM 210 can receive information that ONU 320A will be transmitting traffic upstream through OLT 330 towards aggregation switch 340 at a future specified time (e.g. 800 microseconds). Once step 1010 is complete, method 1000 proceeds to step 1020.

At step 1020, the received traffic event is analyzed. In an embodiment, for this running example, NPM 210 has access to the following information:
aggregation switch 340 is currently in a sleep state and requires a pre-defined wake-up period (e.g., 700 microseconds); and OLT 330 requires 400 microseconds for transmission of traffic from ONU 320A. Once step 1020 is complete, method 1000 proceeds to step 1030.

At step 1030, configuration instructions are generated to adjust sleep settings of the second component based on analyzing the future traffic event. In this running example, aggregation switch 340 will continue in a sleep state for as long as possible and wake-up at just before the traffic from ONU 320A arrives. NPM 210 generates configuration instructions based on the transmission time of the traffic event from ONU 320A (800 microseconds), the transmission time through OLT 330 (400 microseconds), and the wake-up period of aggregation switch 340 (700 microseconds). Based on the foregoing, the configuration instructions will set aggregation switch 340 to begin wake-up in approximately 500 microseconds, which is determined from ((400 + 800) - 700 microseconds). Once step 1030 is complete, method 1000 proceeds to step 1040.

At step 1040, configuration instructions are sent to the second component. In this running example, the generated configuration instructions are sent to aggregation switch 340 to start wake-up in approximately 500 microseconds. Once step 1040 is complete, method 1000 ends at step 1050.

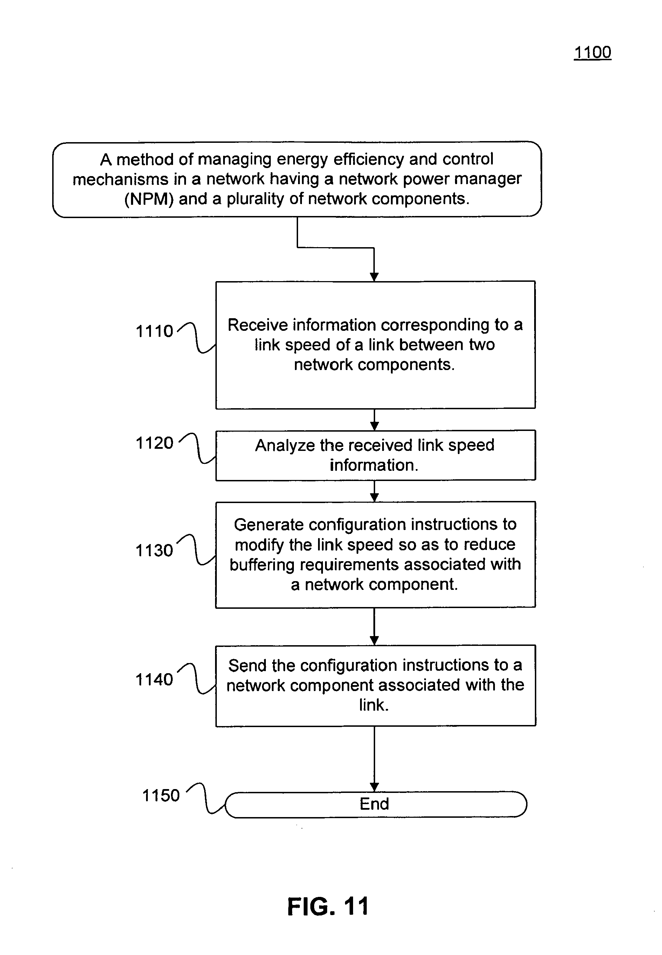

FIG. 11 presents a method 1100 of managing energy efficiency and control mechanisms in a network having a network power manager (NPM) and a plurality of network components, such method described with respect to receiving and processing various link speed and status information, and is not meant to be limiting.

As shown in FIG. 11, an embodiment of method 1100 begins at step 1110 where information corresponding to a link speed and component buffering of a link between two network components is received. For example, NPM 210 receives information corresponding to the link speed of the link between ONU 320A and OLT 330, and the buffer time of OLT 330. Once step 1110 is complete, method 1100 proceeds to step 1120.

At step 1120, the received link speed information and buffer information is analyzed. For example, NPM 210 has access to the required buffer time of OLT 330 (500 microseconds) and determines that adjusting the link speed would reduce the buffering time of the OLT 330. Once step 1120 is complete, method 1100 proceeds to step 1130.

At step 1130, configuration instructions are generated to modify the link speed so as to reduce buffering requirements associated with a network component. In this running example, based on the required buffering time for OLT 330 (500 microseconds), NPM 210 generates configuration instructions to reduce the speed of the link between ONU 320A and OLT 330. By reducing the link speed such that traffic requires an extra 500 microseconds to travel to OLT 330, the buffering requirement of OLT 330 can be reduced or eliminated. Once step 1130 is complete, method 1100 proceeds to step 1140.

At step 1140, the generated configuration instructions are sent to a network component associated with the link. In an embodiment, because ONU 320A can control the speed of the link, the configuration instructions are sent thereto. Once step 1140 is complete, method 1100 ends at step 1160.

### NPM Function Implementation

The manager functions herein (e.g. network power manager (NPM)), can be implemented in hardware, software, or some combination thereof. For instance, the NPM functions can be implemented using computer processors, computer logic, application specific circuits (ASIC), etc., as will be understood by those skilled in the arts based on the discussion given herein. Accordingly, any processor that performs the data collection, policy management, coordination, analysis functions described herein is within the scope and spirit of the present invention. For example, an embodiment of NPMs 210, 410A-D use a processor to perform functions, for example data collection and management functions.

Further, the NPM functions described herein could be embodied by computer program instructions that are executed by a computer processor or any one of the hardware devices listed above. The computer program instructions cause the processor to perform the NPM functions described herein. The computer program instructions (e.g. software) can be stored in a computer usable medium, computer program medium, or any computer-readable storage medium that can be accessed by a computer or processor. Such media include a memory device such as a RAM or ROM, or other type of computer storage medium such as a computer disk or CD ROM, or the equivalent. Accordingly, any computer storage medium having computer program code that cause a processor to perform the data collection, policy management, coordination, analysis functions and other related functions described herein are within the scope and spirit of the present invention.

### Conclusion

While various embodiments of the present invention have been described above, it should be understood that they have been presented by way of example and not limitation. It will be apparent to one skilled in the pertinent art that various changes in form and detail can be made therein without departing from the spirit and scope of the invention. Therefore, the present invention should only be defined in accordance with the following claims and their equivalents.

## Claims

1. A system for managing energy efficiency and control mechanisms in a communications network having a plurality of network components, comprising:
a network power manager (NPM) coupled to at least one of the plurality of network components, wherein the NPM is configured to:
receive power information from at least one of the plurality of the network components;
analyze the power information;
generate configuration instructions based on the analyzing of the power information; and
send the configuration instructions to at least one of the network components.

2. The system of claim 1, wherein the NPM is further configured to:
receive configuration information from at least one of the network components; and
send the configuration information to at least one of the network components.

3. The system of claim 1, wherein the power information comprises an operational characteristic of one of the plurality of network components.

4. The system of claim 3, wherein the operational characteristic is:
a supported link rate available to the network component, or a mode of operation available to the network component.

5. The system of claim 1, wherein the configuration instructions comprise, for traffic on the network, at least one of routing information and switching information.

6. The system of claim 1, wherein the configuration instructions comprise a control policy for controlling energy efficiency and control mechanisms.

7. The system of claim 1, wherein the energy efficiency and control mechanisms include Energy Efficient Ethernet (EEE) control policies.

8. The system of claim 1, wherein the NPM is further configured to coordinate configuration instructions sent to at least two of the plurality of network components.

9. The system of claim 1, wherein the power information received by the NPM comprises a link utilization level of at least one of the plurality of network components.

10. The system of claim 1, wherein the power information received by the NPM comprises characteristics of a link between two of the plurality of network components.

11. The system of claim 10, wherein characteristics of the link between two of the plurality of network components comprises at least one of:
a size of the bursts on the link,
a time between bursts on the link, and
idle time on the link.

12. The system of claim 1, wherein the power information received by the NPM comprises a control policy applied to one of the plurality of network components.

13. The system of claim 12, wherein control policy applied to one of the plurality of network components comprises a link utilization threshold.

14. A method of managing energy efficiency and control mechanisms in a network having a network power manager (NPM) and a plurality of network components, comprising:
receiving power information from at least one of the plurality of the network components;
analyzing the power information;
generating configuration instructions based on the analyzing of the power information; and
sending the configuration instructions to at least one of the network components.

15. The method of claim 14, wherein the power information comprises an operational characteristic of one of the plurality of network components.
